(19) Europäisches Patentamt
European Patent Office
Office européen des brevets

(11) **EP 3 628 168 B1**

(12) **EUROPEAN PATENT SPECIFICATION**

(45) Date of publication and mention
of the grant of the patent:
**27.03.2024 Bulletin 2024/13**

(21) Application number: **19203958.4**

(22) Date of filing: **15.12.2015**

(51) International Patent Classification (IPC):
*A23J 3/14* (2006.01)     *A23J 3/26* (2006.01)
*A23J 1/14* (2006.01)     *A23P 10/30* (2016.01)
*A23P 30/20* (2016.01)     *A23L 5/30* (2016.01)

(52) Cooperative Patent Classification (CPC):
(C-Sets available)
**A23J 3/26; A23J 1/14; A23J 3/14; A23L 5/32;
A23P 10/30; A23P 30/20;** A23V 2002/00     (Cont.)

(54) **A SOLUTION OF DENATURED PEA PROTEIN, AND USES THEREOF TO FORM
MICROPARTICLES**

LÖSUNG VON DENATURIERTEM ERBSENPROTEIN UND VERWENDUNGEN DAVON ZUR
FORMUNG VON MIKROPARTIKELN

SOLUTION DE PROTÉINE DE PETITS POIS DÉNATURÉS ET SES UTILISATIONS POUR FORMER
DES MICROPARTICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2014   EP 14198051**

(43) Date of publication of application:
**01.04.2020   Bulletin 2020/14**

(62) Document number(s) of the earlier application(s) in
accordance with Art. 76 EPC:
**15831137.3 / 3 232 806**

(73) Proprietor: **Anabio Technologies Limited
Dublin D02 (IE)**

(72) Inventors:
• **Bleiel, Sinead
Donnybrook, Dublin 4 (IE)**
• **Kent, Robert
Dublin, 2 (IE)**

(74) Representative: **Purdylucey Intellectual Property
6-7 Harcourt Terrace
D02 FH73 Dublin 2 (IE)**

(56) References cited:
**WO-A1-2014/198787     US-A1- 2014 314 944**

• **KARLA J. KLEMMER ET AL: "Pea protein-based
capsules for probiotic and prebiotic delivery",
INTERNATIONAL JOURNAL OF FOOD SCIENCE
AND TECHNOLOGY, vol. 46, no. 11, 1 September
2011 (2011-09-01), pages 2248-2256,
XP055187943, ISSN: 0950-5423, DOI:
10.1111/j.1365-2621.2011.02743.x**
• **CHAVAN U ET AL: "Functional properties of
protein isolates from beach pea (Lathyrus
maritimus L.)", FOOD CHEMISTRY, ELSEVIER
LTD, NL, vol. 74, no. 2, 1 August 2001
(2001-08-01) , pages 177-187, XP027374861,
ISSN: 0308-8146 [retrieved on 2001-08-01]**
• **DIAELDIN M. RAGAB ET AL: "Fractionation,
solubility and functional properties of cowpea
(Vigna unguiculata) proteins as affected by pH
and/or salt concentration", FOOD CHEMISTRY,
vol. 84, no. 2, 1 February 2004 (2004-02-01), pages
207-212, XP055187914, ISSN: 0308-8146, DOI:
10.1016/S0308-8146(03)00203-6**
• **Stephen Daniels: "US pea protein market 'ready
to explode'", www.foodnavigator-usa.com, 29
January 2013 (2013-01-29), pages 1-5,
XP55270666, Retrieved from the Internet:
URL:http://www.foodnavigator-usa.com/Marke
ts/US-pea-protein-market-ready-to-explode
[retrieved on 2016-05-04]**

EP 3 628 168 B1

- MARINA CARBONARO ET AL: "Solubility-Digestibility Relationship of Legume Proteins", JOURNAL OF AGRICULTURAL AND FOOD CHEMISTRY, vol. 45, no. 9, 1 September 1997 (1997-09-01), pages 3387-3394, XP55187921, ISSN: 0021-8561, DOI: 10.1021/jf970070y
- Hao Feng: "Optimize pH-shifting and ultrasonication to enhance pea protein functionality.", The Free Online Library, 1 November 2015 (2015-11-01), pages 1-2, XP055270801, Retrieved from the Internet: URL:http://www.thefreelibrary.com/Optimize+pH-shifting+and+ultrasonication+to+enhance+pea+protein...-a0434321260 [retrieved on 2016-05-06]
- PEREIRA H V R ET AL: "Legumes seeds protein isolates in the production of ascorbic acid microparticles", FOOD RESEARCH INTERNATIONAL, ELSEVIER APPLIED SCIENCE, BARKING, GB, vol. 42, no. 1, 1 January 2009 (2009-01-01), pages 115-121, XP025769654, ISSN: 0963-9969, DOI: 10.1016/J.FOODRES.2008.10.008 [retrieved on 2008-11-05]
- Raul Ianchici ET AL: "THE INFLUENCE OF THE METHOD OF EXTRACTION AND DRYING OF PROTEINS FROM PEA SEEDS ON THEIR SOLUBILITY UTICAJ METODA EKSTRAKCIJE I SUSENJA NA RASTVORLJIVOST PROTEINA SEMENA GRASKA", Journal on Processing and Energy in Agriculture, 1 January 2011 (2011-01-01), pages 87-89, XP55270373, Retrieved from the Internet: URL:http://scindeks-clanci.ceon.rs/data/pdf/1821-4487/2011/1821-44871102087I.pdf [retrieved on 2016-05-03]
- Miroljub Barać ET AL: "Functional Properties of Pea (Pisum sativum, L.) Protein Isolates Modified with Chymosin", International Journal of Molecular Sciences, vol. 12, no. 12, 29 November 2011 (2011-11-29), pages 8372-8387, XP055270647, DOI: 10.3390/ijms12128372
- O'SULLIVAN JONATHAN ET AL: "Comparative assessment of the effect of ultrasound treatment on protein functionality pre- and post-emulsification", COLLOIDS AND SURFACES A : PHYSIOCHEMICAL AND ENGINEERINGS ASPECTS, ELSEVIER, AMSTERDAM, NL, vol. 484, 3 August 2015 (2015-08-03), pages 89-98, XP029271975, ISSN: 0927-7757, DOI: 10.1016/J.COLSURFA.2015.07.065

(52) Cooperative Patent Classification (CPC): (Cont.)

C-Sets
A23V 2002/00, A23V 2250/548, A23V 2300/08, A23V 2300/16

**Description**

**Technical Field**

The invention relates to a method of producing a denatured pea protein. and to a denatured pea protein solution produced according to the method. The invention also relates to a method of producing microparticles having a denatured pea protein matrix comprising the step of providing a denatured pea protein solution of the invention.

**Background to the Invention**

Animal proteins (whey proteins, gelatin, casein) extracted from animal derived products (milk, collagen) are widely used for encapsulation of active substances. These natural polymers present clear advantages: biocompatibility, biodegradability, good amphiphilic and functional properties such as water solubility, and emulsifying and foaming capacity. However, cost, allergenicity and market limitations represent some shortfalls for animal derived proteins. Currently, the widespread presence of microparticles based on animal proteins, contrasts with the very limited use of plant proteins in industry. This tendency should be reversed in coming years. In food applications, plant proteins are known to be less allergenic compared to animal derived proteins. For these reasons, over the past few years, the development of new applications for plant products rich in proteins has become an increasingly interesting area for research. For the last decade, the protein ingredient industry has been turning towards plants as a preferred alternative to animal-based sources, e.g. in vegetarian diets, due to increased consumer concerns over the safety of animal-derived products.

The two techniques mainly used for microencapsulation of active material by vegetable proteins are spray-drying and coacervation. Both processes share the aspect of "green chemistry" with vegetable proteins as renewable and biodegradable resources, plus, the two techniques do not need the use of organic solvents. Other processes such as solvent evaporation techniques can be also considered; however other excipient and polysaccharides need to be introduced to generate a defined structure.

Spray-drying is a continuous process to convert an initial liquid into a solid powder of microparticles. It is a very common dehydration process used to form a continuous matrix surrounding the active substances. This technology offers several advantages: it is simple, relatively inexpensive and rapid. The important factor for successful microencapsulation by spray- drying is a high solubility of shell material in water and a low viscosity at high solid content. Disadvantages of this technique are the loss of a significant amount of product (due to adhesion of the microparticles to the wall of the spray-dryer) and the possibility of degradation of sensitive products at high drying temperatures.

Microencapsulation by coacervation is carried out by precipitation of wall forming materials around the active core under the effect of one of the following factors: change of pH or temperature, addition of a non-solvent or electrolyte compound Coacervation occurs either via a simple or complex method. Simple coacervation involves only one colloidal solute and thus formation of a single polymer envelope. Complex coacervation is generated by mixing two oppositely charged polyelectrolytes in order to allow shell formation around an active core. Ducel *et al.* (2004) examined the use of pea globulin (isoelectric point in a pH range 4.4-4.6) for triglyceride microencapsulation by complex coacervation plus the influence of pH and polymer concentration on the microcapsule size. Increasing pea globulin/ gum arabic (50:50) blend concentration in the initial makeup, resulted in increased microcapsule size. For example, at pH 3.5, microcapsule diameters varied from 28 $\mu$m to 97 $\mu$m with a concentration change of 1 g/L to 10 g/L respectively. Conversely, Lazko et al. (2004a) observed a decrease of coacervate size with an increase of soy protein concentration. In fact, the mean diameter of microparticles obtained, decreased from 153 $\mu$m to 88 $\mu$m as the protein concentration increased from 0.5 g/L to 5 g/L respectively. This discordance between published results was probably due to coacervation process differences. Complex coacervation was used in the case of pea proteins, and particle agglomeration and coalescence increased their size. The presence of polysaccharides in the initial preparation can also influence coacervate agglomeration (Klassen and Nickerson, 2012). On the other hand, simple coacervation was used for preparing soy protein microparticles. Higher concentrations of surface active proteins in the emulsion increased the coalescence resistant of coacervates.

Klemmer et al (International Journal of Food Science and Technology 2011, 46, 2248-2256) describes a pea protein solution and its use to make probiotic bacteria containing capsules. The method of Klemmer involves dissolving a pea protein isolate in an alkali solvent, heating the solution to denature the protein and then cooling the denatured protein. Alginate is then added to the denatured protein solution and the biopolymer mixture is then subjected to further heating and cooling steps, prior to addition of the probiotic bacteria and extrusion of the mixture through a needle to produce droplets which are cross-linked in a calcium bath to form capsules having an average diameter of about 2mm. The use of a pea/alginate solution as a matrix for encapsulation is problematical for oral digestion as the pea/alginate matrix does not survive gastric transit, but break-up in the stomach releasing the probiotic bacteria where they are destroyed in the acidic conditions. Moreover, the addition of alginate to the pea protein solution increases the viscosity of the biopolymer mixture to the extent that it is difficult for it to be processed into microdroplets, meaning that the resultant capsules are large and not microbeads or microcapsules.

US Patent Specification No. 2014/314944 describes a method for preparing pea protein hydrolysates rather than denatured pea protein solutions while Chavan et al. (Food Chemistry, vol. 74, no. 2, 1 August 2001 (2001-08-01), pages 177-187) discloses a method for preparing a beach pea protein solution and Diaeldin M. Ragab et al. (Food Chemistry, vol. 84, no. 2, 1 February 2004 (2004-02-01), pages 207-212) describes a method for preparing a cowpea protein solution. Stephen Daniels (www.foodnavigator-usa.com, 29 January 2013 (2013-01-29), pages 1-5) describes discloses a pea protein for adding to beverages and Marina Carbonaro et al (Journal of Agricultural and Food Chemistry, vol. 45, no. 9, 1 September 1997 (1997-09-01), pages 3387-3394) describes a solution comprising 3% chickpea protein. Hao Feng (The Free Online Library, 1 November 2015 (2015-11-01), pages 1-2) describes a combination of alkali treatment and sonication for solubilising pea protein. Raul Ianchici et al. (Journal on Processing and Energy in Agriculture, I January 2011 (11-01-01), pages 87-89) describes the influence of extraction methods and drying of pea proteins on their solubility.

It is an object of the invention to provide a solution of denatured pea protein that is suitable for use in forming microparticles, and a process for the production thereof. It is a further object of the invention to provide a process for forming pea protein microparticles.

## Statements of Invention

The invention is set out in the appended set of Claims.

A solution of denatured pea protein of the invention has a very high content of soluble pea protein (i.e greater than 90% using the method described below) and has a sufficiently low viscosity to enable it to be extruded or sprayed through a nozzle (inclusive of spray-drying nozzles and atomisation wheels) during the formation of microbeads. The high content of soluble denatured pea protein provides for an efficient process in which the use of the pea protein substrate is maximised. In addition, a denatured pea protein solution formed according to the method of the invention, and having a pea protein concentration of about 6-9% (w/v), can be efficiently polymerised in acid to form micro-sized microparticles without the need for additional biopolymers in the matrix, and the formed microparticles are capable of gastric transit intact and small intestinal release, specifically ileal release.

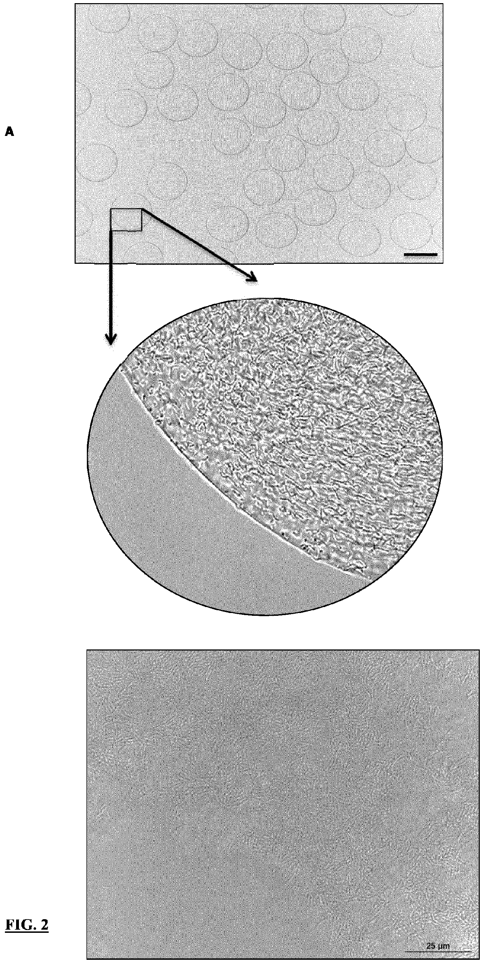

The method of producing pea protein microparticles of the invention results in microparticles that are spherical, typically have a homogenous size distribution, and are capable of surviving passage through a mammalian stomach intact and subsequently breaking up in the small inestine, specifically the ileum. This allows the microparticles to deliver acid-sensitive active agents to the small intestine without damage. Moreover, the spherical shape of the microparticles and the homogenous size distribution allows for controlled and repeatable active agent release kinetics. The method for the production of the microparticles involves forming droplets of the denatured pea protein solution of the invention, and then cold gelation of the droplets in an acidic bath. Surprisingly, the Applicant has discovered that use of an acidic gelling bath having a pH that is the same as the pI of the pea protein results in irregularly shaped microparticles, and that to achieve highly spherical microbeads (such as those shown in Fig. 2) requires that the pH of the gelling bath is less than the pI of the pea protein.

Typically, the cooled denatured pea protein solution is clarified to remove insoluble matter. Various methods of clarification will be apparent to a person skilled in the art. Preferably, the solution is clarified by centrifugation.

Typically, the pea protein solution is rested for at least 30 minutes. Ideally, the pea protein solution is rested for at least 40 minutes. In one embodiment, the pea protein solution is rested for at least 45, 50, 60, 70, 80, 90, 100, 110, 120 minutes.

In one embodiment, the solvent is an alkali solvent and the solution has a pH of at least 10.

Ideally, the denatured pea protein solution comprises 6.5-8.5% denatured pea protein (w/v).

Preferably, at least 95% of the pea protein in the denatured pea protein solution is soluble.

Preferably, the denatured pea protein solution has a viscosity that is sufficiently low to allow the solution be extruded into microdroplets.

Preferably, the nozzle is heated in the method of producing microparticles having a denatured pea protein matrix.

Typically, the nozzle assembly comprises an electrostatic voltage system configured to apply an electrical potential between the nozzle and an electrode disposed beneath the nozzle. The nozzle employed in the method of producing microparticles having a denatured pea protein matrix can also represent a typical nozzle encountered in a spray-drier.

In the method of producing microparticles of the invention, the microparticles are typically spherical microparticles, and ideally spherical microparticles having a homogenous size distribution.

The microparticles formed according to the method of the invention can be a microcapsule having a shell and a core comprising native pea protein. The microcapsule is gastric resistant (it can pass through the mammalian (especially human) stomach intact). The microcapsule is capable of releasing the core in the mammalian (especially human) small intestine, preferably the ileum, ideally the proximal ileum. The shell is denatured pea protein and the microcapsule can be coated with chitosan or gelatin.

The microparticles formed according to the method of the invention can also be a microbead having a continuous matrix formed of denatured pea protein and an active agent dispersed throughout the denatured pea protein matrix. The microbead is gastric resistant and is capable of releasing the active agent in the mammalian (especially human) small intestine, preferably the ileum, ideally the proximal ileum. The microbead can be coated with chitosan or gelatin.

The microparticles formed according to a method of the invention (i.e. microbeads or microcapsules) can be coated in chitosan or gelatin. This may be achieved by immersing the microparticles in a bath containing the chitosan or gelatin,and leaving the microparticles immersed for a period of time for the chitosan or gelatin in the bath form a coating on the microparticles. A chitosan bath can comprise 0.5 to 2.0% chitosan (w/v) in a weak organic acid solvent (i.e. acetic acid). A gelatin bath can comprise 0.5 to 5.0% gelatin (w/v) in a weak organic acid (i.e. acetic acid) or aqueous solvent. The methods of the invention can include an additional step of coating the microparticles in a chitosan or gelatin solution, optionally by immersion of the microparticles in a gelatin or chitosan bath.

## Brief Description of the Figures

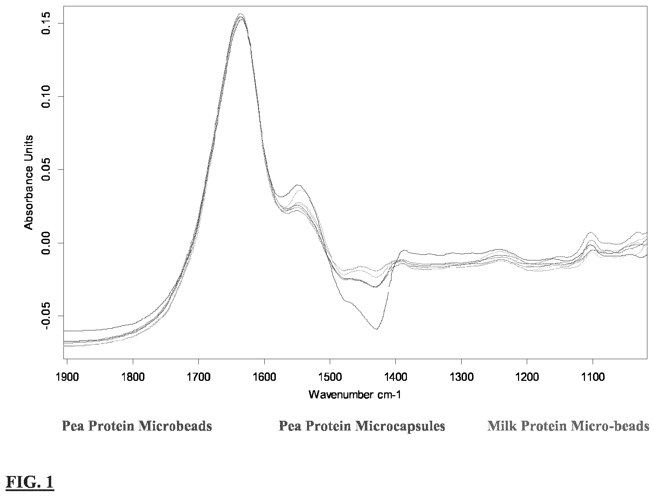

**Fig. 1**: Infrared spectra pea protein microbeads and capsules.

**Fig. 2:** Light Microscopy Image of Pea Protein microbeads after encapsulation (A) and in the presence of encapsulated probiotic cultures (B). Bar represents 200 microns.

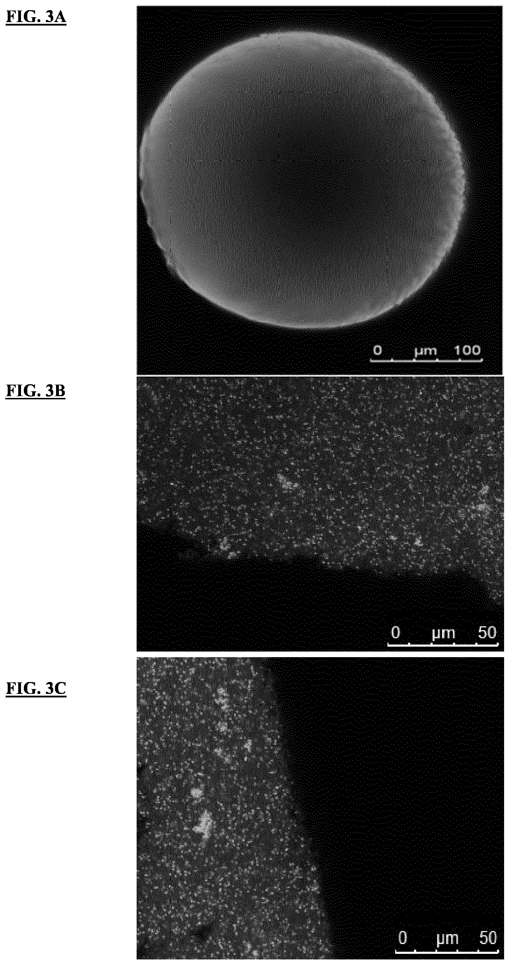

**Fig. 3**: Confocal Microscope image of Pea protein microbead using BACLight Confocal staining. Green fluorescence indicates live probiotics and red fluorescence indicates dead probiotics. Figure A illustrates the microbead topography; B and C illustrates the large surface area of the microbead membrane

**Fig. 4:** Atomic Force Microscope image of the surface of a protein microcapsule (A) and microbead (B)

**Fig. 5:** Light microscope illustration of *in vitro* gastro-intestinal delivery of pea protein micro-beads. Images illustrate (A) stomach incubation after 30 min at pH 1.6; (B) stomach incubation after 180 min at pH 1.6; Figure C illustrates micro-bead digestion after 5 minutes intestinal incubation (pH 7.2).

**Fig. 6:** Tensile strength of pea protein micro-beads during *in vitro* stomach incubation.

**Fig. 7:** Visualisation of progressive dissolution of pea protein microbeads during *ex vivo* gastro-intestinal incubation. Size exclusion HPLC measured protein/peptide release from micro-capsules (B) after 30 min of intestinal incubation. The standard curve of protein/peptide standards (♦) indicated the molecular weights of typical peptide expected to be found in intestinal samples.

**Fig. 8:** Efficiency of encapsulation of a bacterial strain in 8 % (w/v) commercial pea protein isolate microbeads. Pea protein suspension represents free cells in the presence of commercial pea protein isolate. Pea protein microbeads represents levels of viable cells detected following microencapsulation of the pea protein suspension, and washing (in water). Figure B illustrates the comparison of CFU/g of pre-encapsulation matrix/bacterial mixture (orange) and subsequent bacterial microbeads (grey) with high cell capacity .

**Fig. 9:** Survival of free bacterial cells in final product/ prototype, encapsulated bacterial cells within 8 % (w/v) commercial pea protein isolate microbeads and free bacterial cells in an 8 % (w/v) commercial pea protein isolate suspension. Grey bars illustrate the cell concentration in the final prototype / product. Each prototype was separately added to water maintained at ~85°C and held for 90 seconds prior to cooling on ice. Cell viability was analysed using the plate count method.

**Fig. 10:** Illustrates the presence of pea protein capsules *in vivo* in the stomach of human candidates.

**Fig. 11:** Release of peptide & Free Amino Acids in Jejunum during *in vivo* Gastro-intestinal Transit of pea protein microcapsule.

**Fig.12:** Illustrates the presence of intact protein (blue line) and peptide release Black line as measured by size exclusion HPLC within the jejunum and ileum of human candidates Trace amounts of peptides identified in the intestinal digesta at T =10 min are represented by the red baseline.

**Fig. 13:** Microbeads made by englobbing method using a denatured pea protein solution that was not rested prior to the heat denaturation step.

## Detailed Description of the Invention

Definitions

"Pea protein" should be understood to mean a source of pea protein, for example total pea protein. Preferably the pea protein is pea protein isolate (PPI), pea protein concentrate (PPC), or a combination of either. In one embodiment, the pea protein has a purity of at least 70% (i.e. at least 90% by weight of the source of pea protein is pea protein. In one embodiment, the pea protein has a purity of at least 80%. In one embodiment, the pea protein has a purity of at least 90%. Examples of pea protein having a high purity include materials with low ash content.

"Partially solubilise" means that the pea protein is substantially, but not fully, solubilised in a suitable solvent. Generally, up to 60% or 70% of the pea protein is solubilised. Partial solubilisation is generally achieved with chemical means (i.e. alkali solubilisation). A resting step is required to achieve more complete solubilisation, for example solubilisation for 90% or more of the pea protein.

"Alkali solvent" means an aqueous solution of a suitable base for example NaOH or KOH. Preferably, the alkali solvent comprises an aqueous solution of 0.05-0.2M base, more preferably 0.05-0.15. Ideally, the alkali solvent comprises an aqueous solution of 0.075-0.125 M base. Typically, the alkali solvent is an aqueous solution of NaOH, for example 0.05-0.2M NaOH. Preferably, the alkali solvent comprises an aqueous solution of 0.05-0.2M NaOH or KOH, more preferably 0.05-0.15 NaOH or KOH. Ideally, the alkali solvent comprises an aqueous solution of 0.075-0.125 M NaOH or KOH.

"pH of at least 10" means a pH of greater than 10, typically a pH of 10-13 or 10-12. Ideally, the pH of the pea protein solution is 10.5 to 11.

"Sonication" means application of sound energy to partially solubilise and hydrate the pea protein and is an alternative to solubilisation in an alkali solvent not encompassed by the Claims. The process generally involves preparing a dispersion/solution of pea protein, and then applying sound energy, generally sound of ultrasonic frequencies, to the dispersion/solution for a sufficient period of time to solubilise and hydrate the pea protein. Sonicators are commercially available from Qsonica LLC and SinapTec.

"Pea protein solution" means a liquid pea protein composition comprising soluble pea protein and optionally insoluble pea protein. The methods of the invention provide for pea protein solutions comprising high levels of soluble pea protein, typically greater than 90%, or 95% (for example, 95-98% soluble pea protein). When the pea protein is mixed with alkali solvent, or sonicated, the amount of soluble pea protein will gradually increase during the resting step until high levels of the pea protein is solubilised, at which point the pea protein solution is heat-denatured. This results in a solution of denatured pea protein having very high levels of denatured pea protein present in the form of soluble denatured pea protein aggregates.

The term "soluble" or "solubilised" as applied to pea protein (or denatured pea protein) should be understood to mean that the pea protein is present as a soluble pea protein aggregate. Typically, the terms mean that the soluble aggregates will not come out of solution upon centrifugation at 10,000 $\times g$ for 30 minutes at 4°C.

"Resting the pea protein solution" means leaving the pea protein solution rest for a period of time to allow the pea protein solubilise in the alkali solvent. Generally, the pea protein solution is allowed to rest for at least 20, 25, 30, 35, 40, or 45 minutes. Typically, the pea protein solution is rested at room temperature. Typically, the pea protein solution is rested for a period of time until at least 90% of the pea protein has been solubilised. Before being rested, the pea protein solution tends to be cloudy and opaque and contains sediment, but after a period of resting the cloudiness dissipates as the amount of solubilised pea protein increases. As an example, the resting step can increase the % of solubilised protein from 60% to 90% or higher.

"Conditions sufficient to heat-denature the pea protein without causing gelation of the pea protein solution" means a temperature and time treatment that denatures at least 90%,

95% or 99% of the pea protein present in the solution while maintaining the solution in a form suitable for extrusion (i.e. readily flowable with suitable viscosity). The temperature and times employed may be varied depending on the concentration of the pea protein solution. Thus, for example, when an 8% pea protein solution (w/v) is used, the solution may be treated at a temperature of 80-90°C for 20-30 minutes (or preferably 85°C for 25 minutes). However, it will be appreciated that higher temperatures and shorter times may also be employed.

"Rapidly cooling the denatured pea protein solution" means actively cooling the solution to accelerate cooling compared with simply allowing the solution to cool at room temperature which the Applicant has discovered causes the solution to gel. Rapid cooling can be achieved by placing the solution in a fridge or freezer, or on slushed ice, until the temperature of the solution has been reduced to at least room temperature.

"At least 90% (w/w) of the pea protein in the denatured pea protein solution is soluble" means that at least 90% by weight of the total pea protein in the solution is in a solubilised form. Preferably at least 95% (w/w), and ideally from 95% to 98% of the pea protein is solubilised. The method of measuring solubility is the shake flask method described below.

"Treated to remove soluble matter" means a separation or clarification step to remove soluble matter such as insoluble pea protein from the pea protein solution. In the specific embodiments described herein, centrifugation is employed (10,000 ×g for 30 minutes at 4°C) is employed, but other methods will be apparent to the skilled person such as, for example, filtration or the like.

"Solution of denatured pea protein" means a solution of pea protein in which at least 90%, 95% or 99% of the total pea protein is denatured. A method of determining the % of denatured pea protein in a pea protein solution is provided below.

"Treating a denatured pea protein solution to form microdroplets" typically means passing the solution through a small orifice whereby the solution is broken up into micro-size droplets. Preferably, the solution is extruded through an orifice. Various methods will be apparent to the skilled person for generating droplets, for example prilling and spraying (ie spray drying). A preferred method of producing the microbeads is a vibrating nozzle technique, in which the suspension is sprayed (extruded) through a nozzle and laminar break-up of the sprayed jet is induced by applying a sinusoidal frequency with defined amplitude to the spray from the nozzle. Examples of vibrating nozzle machines are the Encapsulator (Inotech, Switzerland) and a machine produced by Nisco Engineering AG, or equivalent scale-up version such as those produced by Brace GmbH. Typically, the spray nozzle has an aperture of between 50 and 600 microns, preferably between 50 and 200 microns, suitably 50-200 microns, typically 50-150 microns, and ideally about 80 - 150 microns. Suitably, the frequency of operation of the vibrating nozzle is from 900 to 3000 Hz. Generally, the electrostatic potential between nozzle and acidification bath is 0.85 to 1.3 V. Suitably, the amplitude is from 4.7kV to 7kV. Typically, the falling distance (from the nozzle to the acidification bath) is less than 50cm, preferably less than 40cm, suitably between 20 and 40cm, preferably between 25 and 35cm, and ideally about 30cm. The flow rate of suspension (passing through the nozzle) is typically from 3.0 to 10 ml/min; an ideal flow rate is dependent upon the nozzle size utilized within the process.

"Immediately gelling the droplets in an acidic gelling bath to form microbeads" means that the droplets gel instantaneously upon immersion in the acidic bath. This is important as it ensures that the droplets have a spherical shape and homogenous size distribution. Instantaneous gelation is achieved by employing an acidic bath having a pH less than the pI of the pea protein, for example a pH of 3.8 to 4.2.

"Acidic gelling bath" means a bath having a pH below the pI of the pea protein that is capable of instantaneously gelling the droplets. Typically, the acidic gelling bath has a pH of less than 4.3, for example 3.5 to 4.2, 3.7 to 4.2, or 4.0 to 4.2. The acidic gelling bath is generally formed from an organic acid. Ideally, the acid is citric acid. Typically, the acidic gelling bath has an acid concentration of 0.1M to 1.0M, preferably 0.3M to 0.7M, and more preferably 0.4M to 0.6M. Typically, the acidic gelling bath has a citric acid concentration of 0.1M to 1.0M, preferably 0.3M to 0.7M, and more preferably 0.4M to 0.6M. Preferably, the acidic gelling bath comprises 0.4 to 0.6M citric acid and has a pH of less than 4.3, typically 4.0 to 4.2.

"Microparticles" should be understood to mean generally spherical particles comprising gelled polymer i.e. denatured pea protein and having an average diameter of 50 to 500 microns as determined using the light microscopy method described below. Preferably the microparticles have an average diameter of 50-200 microns as determined using the light microscopy method described below. Preferably the microparticles have an average diameter of 80-200 microns as determined using the light microscopy method described below. Preferably the microparticles have an average diameter of 80-150 microns as determined using the light microscopy method described below. Depending on the method of manufacture, the microparticles may be microbeads or microcapsules.

"Microbeads" means micro-sized particles that are generally spherical and have a continuous polymerised matrix i.e. denatured pea protein matrix, and optionally an active agent dispersed throughout the pea protein matrix.

"Microcapsules" means micro-sized particles that are generally spherical and have a shell formed of gelled polymer i.e. denatured pea protein and a core within the shell. The core comprises for example native pea protein.

"Active agent" means any component suitable for delivery to the mammalian small intestine or ileum, but typically means a component that is sensitive to an external condition for example heat, pH, pressure, chemical stress or enzymes. Thus, the active component may be sensitive to pH, enzymes (i.e. protease enzymes), high pressure, high shear, and temperature abuse during storage. In one particularly preferred embodiment of the invention, the active component is a cell, typically a bacterial cell, and ideally a probiotic cell. Such cells are sensitive to low pH conditions, such as would be encountered in the stomach, and as such need to be shielded from gastric pH and bile salt environments. Probiotic bacteria, and indeed other types of cells, are also sensitive to high shear or high pressure, such as are employed in conventional methods of generating micron-sized polymer beads. Other types of active components which may be encapsulated in the microbeads of the invention include micronutrients, vitamins, minerals, enzymes, starter bacteria, cell extracts, proteins and polypeptides (native or denatured), sugars and sugar derivatives, nucleic acids and nucleic acid constructs, pharmaceutically-active agents, imaging dyes and ligands, antibodies and antibody fragments, phytochemicals and the like.

"Active agent solution" means an active agent contained within a suitable liquid carrier in the form of a solution, dispersion or suspension.

"Nozzle assembly" means an apparatus comprising at least one nozzle that is configured for extruding the pea protein solution through the at least one nozzle. In one embodiment, nozzle assembly comprises a single nozzle, whereby a mixture of active agent and pea protein solution may be extruded the single nozzle to form droplets which when gelled form microbeads. In another embodiment, the nozzle assembly comprises an outer nozzle concentrically arranged around an inner nozzle, and in which the pea protein solution is extruded through the outer nozzle and an active agent solution/suspension/dispersion is extruded through the inner nozzle to droplets which when gelled form microencapsulates with a gelled pea protein shell and an active agent containing core.

"Cured in the acidic gelling bath" means that the microbeads are allowed to remain in the gelling bath for a period of time sufficient to cure (harden) the microbeads. The period of time varies depending on the microbeads, but typically a curing time of at least 30 minutes is employed.

Example 1

*Formation of highly solubilised denatured pea protein solution (alkali solubilisation)*

Prepare pea protein solution in aqueous 0.1 M NaOH to a concentration of 8% w/v (i.e 8g/ 100ml)
Ensure that the pH is in the 10.5-11.0 range
Place the solution into storage for 45 min at room temperature until the protein is fully solubilised
Adjust to pH 10 using HCl or NaOH / KOH as required
Heat-treat the solution to a temperature of 85°C and maintain that temperature for a duration of 25 min.
After heating cool immediately on slushed ice for 30-45 minutes
Centrifuge the cooled solution at 10,000 $x\,g$ for 30 minutes at 4°C

Example 2- Comparative for illustration purposes

*Formation of highly solubilised denatured pea protein solution (solubilisation by sonication (not encompassed by the Claims))*

**Sonicator**

Hielscher 1000hd sonicator, currently located near BFE in Teagasc Moorepark.

**Procedure**

- Hydrate protein in H20 for a minimum of 1 h prior to process.
- Adjust to required pH (eg. 7).
- Optimum volume for this system is 200-600 ml of sample. Sample beaker should not be overfilled to allow for insertion of sonicator probe.
- Place sample beaker on ice prior to procedure.
- In room with sonicator, wheel the device to the right corner of room and plug in the black three hole plug to the back of the device.
- Place sample in sonicator and adjust height (can use books, glove boxes etc.) so that ¾ of the probe is in the sample.
- After ensuring correct ear protection is installed, switch on device using on switch on top right of machine.
- Sonicator door does not have to be shut for successful operation.
- Power of device can be adjusted using wheel located on control panel (current operation uses max power for 10 mins).
- Sonicate at required power for required time.
- Remove sample, it is advised to record temperature of sample following procedure.
- The process may lead to the development of fragments in the sample. An Ultra Turrax can be used in order to break up any fragments that may appear if required (particularly if the sample is to be used for encapsulation/spray-drying) (See appendix two for Ultra Turrax procedure).

  ◦ Time and RPM will be dependent on sample.

Example 3

*Microbead production (Englobbing)*

PURPOSE: For delivery of bioactives to proximal ileum for thermal protection against environmental processing conditions and gastric delivery

Denatured pea protein solution made according to Example 1 or 2 can be combined with active components i.e. probiotics, colours, etc.

The dispersion of denatured pea protein solution + active component is extruded through an orifice for free-fall into polymerisation bath

The polymerisation bath is composed of Citric Acid (0.5M), NaCl (0.3M), (0.4M) and polysorbate 80 (0.01%)

Optimise the amplitude, and adjust the magnitude of positive charge generate a steady stream of free-falling microdroplets. The polymerisation bath is tempered at 37°C with a free fall distance of 16 cm from the orifice and an agitation velocity of 90 rpm to allow for instantaneous polymerisation of denatured pea protein solution and active component into microbeads

The microbeads are allowed to cure in the polymerisation buffer at low agitation speed for 2 hour at room temperature

Example 4

*Microcapsule production*

PURPOSE: Delivery of native pea protein to the proximal ileum for the stimulatory release of satiety hormones GLP-1 and for appetite suppression

Mono-disperse and mono-nuclear microcapsules were prepared using the co-extrusion laminar jet break-up technique. The encapsulator was fitted with one of two different sized concentric nozzles (internal and external)

A solution of denatured pea protein (7% w/v) was prepared according to Example 1 or 2 The solution of denatured pea protein is supplied to the external nozzle using an air pressure regulation system which enabled flow rates of 1-3 L/min to be generated using a maximum head pressure of 0.5- 0.8 bar

The desired flow rate was set using a pressure reduction valve. The internal phase (native pea protein, non-denatured) was supplied using a precision syringe pump connected to the inner nozzle to supply the inner phase at flow rates of between 5 and 15 L/min

If bioactive are added, they will be incorporated into the internal phase.

Spherical microcapsules were obtained by the application of a set vibrational frequency, with defined amplitude, to the co-extruded liquid jet consisting of denatured pea protein and the core native protein

The material in the inner and outer nozzle are both heated to 40°C in order to allow for better flowability in commercial operations

The resulting concentric jet broke up into microcapsules which fell into a magnetically stirred gelling bath 20 cm below the nozzle

The gelling bath consisted of 36 g/l citric acid, 10 mM MOPS, pH 4.0

Tween 80 is added (0.1-0.2% (v/v)) to reduce the surface tension of the gelation solution

To prevent coalescence of the microcapsules during jet break-up and/or when entering the gelling bath, a high negative charge was induced onto their surface using an electrostatic voltage system which applied an electrical potential of 0-2.15 kV between the nozzle and an electrode, placed directly underneath the nozzle

As microcapsules fell through the electrode, they were deflected from their vertical position resulting in their impact occurring over a larger area in the gelation solution

Microcapsules were allowed to harden for at least 30 min to ensure complete gelation and were then washed and filtered using a porous mesh to remove any un-reacted components

Example 5 (comparative)

*Microbead production (Englobbing)*

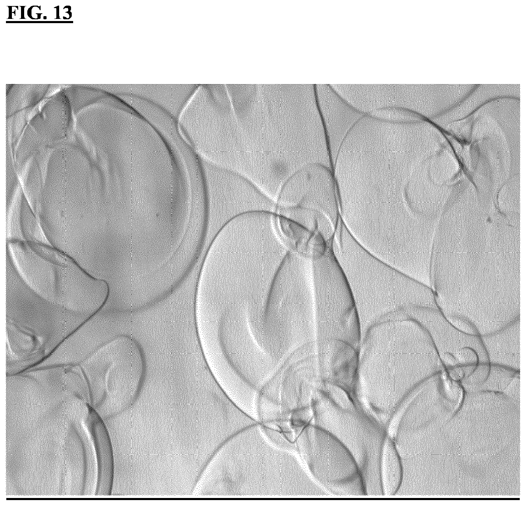

Microbeads are produced according to Example 3, but using a denatured pea protein solution that was not rested prior to heat denaturation. The resultant microbeads are shown in Fig. 13.

Characterisation of Microbeads of Example 3 and Microcapsules of Example 4 and 2

*Size distribution analysis*

The mean size distribution of pea protein capsules and microbeads was validated to ensure reproducibility of the production process. D (v, 0.9) (size at which the cumulative volume reaches 90% of the total volume), of encapsulated batches were determined using a laser diffractometer with a range of 0.2-200 μm. For particle size analysis, batches were resuspended in Milli-Q water and size distribution was calculated based on the light intensity distribution data of scattered light.

*Protein Content:*

The protein- (nitrogen $\times$ 6.25) was determined using standard methods (AOAC, 1990). Protein isolates (200 mg) were suspended in 20 ml deionized water and the pH of the suspensions were adjusted between 2.0 and 9.0 using 0.1 N HCl or NaOH solutions. These suspensions were magnetically stirred for 1 h; pH was checked and adjusted if required, then centrifuged at 8,000 $\times$ g for 10 min. The protein content (N $\times$ 6.25) of supernatant was calculated by estimating nitrogen content (Kjeldahl method).

*Zeta Potential $\zeta$ and Surface Hydrophobicity ($H_0$)*

Zeta Potential $\zeta$ and Surface Hydrophobicity ($H_0$) was determined for the pea protein microbead and microcapsules. The zeta potential ($\zeta$) of the protein isolates was measured using Zetasizer Nano ZS (Malvern Instrument Ltd., UK). Freshly prepared protein microbeads and microcapsules were suspended in de-ionized water prior to analysis. Surface hydrophobicity ($H_0$) pea protein micro-beads / microcapsules were estimated using ANS-hydrophobic probe following the method of Kato and Nakai, 1980 (Hydrophobicity determined by a fluorescence probe method and its correlation with surface properties of proteins, Biochim Biophys Acta. 1980 Jul 24;624(1):13-20*). The encapsulation dispersions were incubated in dark for 15 min and fluorescence intensity (FI) was measured at excitation and emission wavelengths of 390 and 470 nm, respectively using Photoluminescence/Fluorescence spectrometer. FI of ANS-blank and diluted protein solutions without ANS were also measured and subtracted from the FI of the encapsulated protein dispersions with ANS. The initial slope of the plot of the corrected FI versus protein concentration was calculated by linear regression analysis and used as an index of protein $H_0$. The results are shown in Table 1 below:

TABLE 1

| Format | Protein Content (%) | Zeta Protential $\zeta$ (mV) | Surface Hydrophobicity ($H_0$) |
|---|---|---|---|
| **Micro-beads** | 94.35% $\pm$ 0.34% | - 48.32 mV $\pm$ 2.31 mV | 587 $\pm$ 21.23 |
| **Micro-capsules** | 94.08% $\pm$ 0.21% | - 41.32 mV $\pm$ 1.92 mV | 522 $\pm$ 19.62 |

*FTIR*

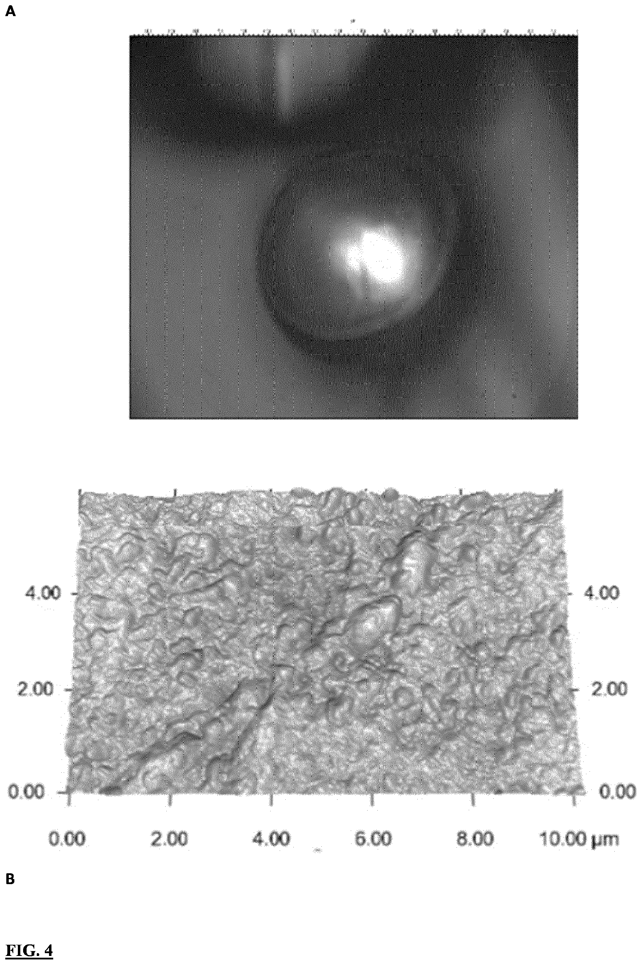

Infrared spectra pea protein microbeads and microcapsules were recorded using FTIR spectrometer (Vertex 70, Bruker Optics Inc., Germany) equipped with Attenuated Total Reflectance (ATR) cell (PIKE Technology Inc., USA). Protein micro-capsules/ micro beads were stored in desiccators over $P_2O_5$ for more than two week in order to remove moisture. The moisture-free isolates were placed on the ATR crystal and pressed down to ensure good contact. The spectrometer was continuously purged with dry air. The spectra in the range of 4000-600 cm$^{-1}$ were recorded (average of 120 spectra at 4 cm$^{-1}$ resolution) and referenced against that of an empty cell. The spectra were subjected to Fourier self-deconvolution (FSD), second derivative (SD) analysis and curve fitting procedures to locate overlapping peaks in amide-I (1700-1600 cm$^{-1}$) region. Figure 4 below illustrates the contrast in secondary structure of microbeads and micro capsules made from pea protein. The graph also illustrates the difference between milk protein micro-beads relative to those composed of pea protein. Hence the secondary structure is different and the polymerization of the material will also be different during encapsulation.

*Microscopy*

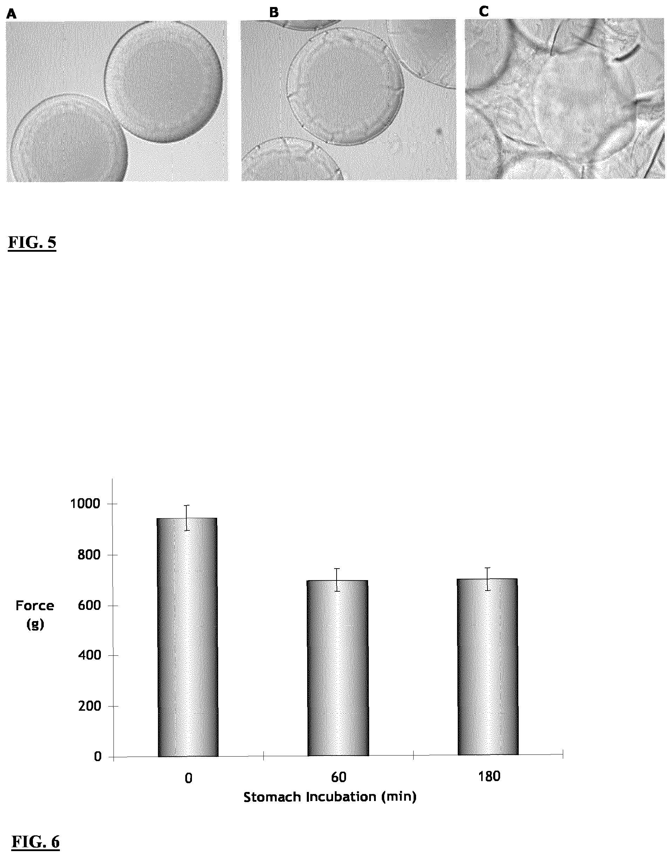

In addition to light microscopy, further image analysis was performed using a Leica TCS SP5 confocal scanning laser microscope (CSLM) for the purpose of micro-particle morphology assessment. Figure 5 illustrates the homogenous size distribution of pea protein microcapsules (average diameter 150 microns). Figure 5b further shows the encapsulation of probiotics in a pea protein microbead with preferable cell distribution throughout the entire microbead.

Confocal was also utilised to demonstrate the even distribution of bioactive material i.e. *Lacotbacillus rhamnosus GG)* within a microcapsule after the production process. Figure 6 demonstrates that the process of microencapsulation is not detrimental to the survival of probiotics.

Confocal analysis was conducted by illumination using an argon laser (488 nm laser excitation) and red-green-blue images (24 bit), 512 by 512 pixels, were acquired using a zoom factor of 2.0, giving a final pixel resolution of 0.2 $\mu$m /pixel.

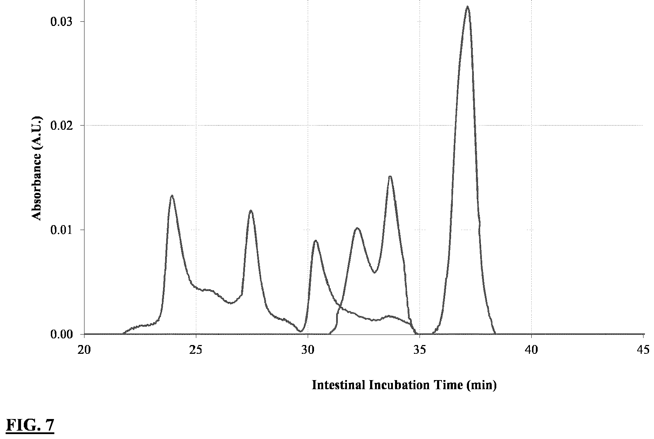

Atomic force microscopy (AFM; Asylum Research MFP-3D-AFM) and Scanning Electron Microscopy (SEM) were also utilised to investigate the significance and magnitude of electrostatic interactions between probiotics and pea protein during encapsulation. Figure 7 illustrates the surface topography of a pea protein micro-bead (Fig. 7A) and a pea protein microcapsule (Fig.7B). It is clear that the surface of a microbead has more cervices and possible pores relative to the surface of a micro-capsule. Hence, the pea protein capsule will potentially have a great ability to resist diffusion and mass transfer effects i.e. water uptake. Micorcapsules also illustrates the ability to protect krill oil and fatty acids (DHA and ARA) against oxidation

*Method of determining solubility of pea protein solution*

A standard technique to determine the thermodynamic aqueous compound solubility is the shake flask method. Solubility studies of pea protein were determined by equilibrating excess amount of pea protein in buffer solutions of pH 1.2, 4.5, 6.8, 7.5 and purified water. Assays were performed in plastic flasks with a capacity of 50 mL. In each flask were added 10 mL of media/ water and the respective amount of pea protein separately. The amount was sufficient to saturate each media, which was characterised by depositing of substance not solubilised. An incubator shaker was used to maintain samples at 37°C during the test with agitation at 150 rpm for 72 hours (until an equilibrium condition was achieved). After this period, samples were immediately filtered (0.45 $\mu$m) and diluted in a volumetric flask with the corresponding media. For quantification of pea protein, a UV-Vis spectrophotometer (Varian) was used at 214nm and 280nm absorbance wavelength for each media. Solubility values were calculated using calibration curves pre-determined for soluble protein sources.

With solubility results, the dose: solubility ratio was calculated, which is obtained by dividing the commercially acceptable dose of the pea protein (in milligrams) by the solubility (in milligrams per millilitre) obtained in the tests. The values of the dose: solubility ratio are then compared with the criteria established by the ingredient manufacturer guidance to verify if the protein is highly soluble or not.

*Method of determining % of denatured pea protein*

Evaluation of pea protein denaturation involves three essential analysis steps:

- Determination of Pea Protein Concentration
- Preparation of reaction equation
- Electrophoresis, turbidity & agglomerate measurement

*i) Determination of Pea Protein Concentration*

The pea protein concentration was determined by reverse phase HPLC using a Source™ 5RPC column (Amersham Biosciences UK limited). The HPLC system consisted of a Waters 2695 separation module with a Waters 2487 dual wavelength absorbance detector.

*Preparation of Reaction Equation*

The denaturation kinetics of pea protein was determined according to the following equation:

$$dC/dt - kC^n$$

where k is the reaction rate, n is the reaction order and C the concentration of native pea protein.

This equation can be integrated to give

$$(C_t/ C_0)^{1-n} = 1+(n-1)kt \ (for \ n>1)$$

Where Ct, is the native pea protein concentration at time t, $C_0$ is the initial pea protein concentration.
Further rearranging gives,

$$C_t/\,C_0 = [1+(n-1)kt]^{1/1-n}$$

The natural log of this equation was taken,

$$\ln(C_t/\,C_0) = [1/(1-n)]\ln[1+(n-1)kt]. \quad (\text{Equation } 1)$$

Logging decay data such as this equalises the data per unit time and reduces error when solving the equations. The reaction orders and rates were determined by fitting the experimental data to Equation 1. All experimental points were included in the curve fit; this is reasonable considering the rapid heating-up time of the protein solution. Introducing a lag-time to the data did not significantly alter the results obtained. The data were also fitted to the first order decay equation,

$$\ln(C_t/\,C_0) = -kt \quad (\text{Equation } 2)$$

to rule out the possibility of first order kinetics.

*iii) HPLC analysis*

High pressure size exclusion chromatography was used to study the disulphide linked aggregates. The aggregates formed during the heating stage were treated with a buffer comprising of 20mM Bis-tris pH 7.0, 5% SDS and 50mM iodoacetamide (IAA). The treated aggregates were stirred overnight at room temperature and filtered through a 0.45$\mu$m syringe filter prior to analysis. An ÄKTA Purifier chromatography system (Amersham Bioscience UK limited) with a TSK G2000 and a TSK G3000 columns (TosoHaas, Montogomeryville, PA. USA) in series were used for the separation. The eluent was 20mM sodium phosphate buffer at pH 7.0 containing 1% SDS. A dye, blue dextran 2000, was used to determine the void volume of columns. Determination of free-amine ($NH_2$) groups was determined via the 2,4,6-trinitrobenzene 1-sulfonic acid (TNBS) methodology of Adler-Nissen, 1979 (Determination of the degree of hydrolysis of food protein hydrolysates by trinitrobenzenesulfonic acid, J. Adler-Nissen J. Agric. Food Chem., 1979, 27 (6), 1256-1262).

iv) *Electrophoresis, turbidity & agglomerate measurement*

Two-dimensional electrophoresis was performed according to previously described methods *(*Laemmli U.K. (1970). Cleavage of structural proteins during the assembly of the head of bacteriophage T4. Nature 227(5259): 680-5.*)*. The running buffer used was free from $\beta$-mercaptoethanol due the disassociating effect it has on the protein. This caused the break-up of protein aggregates by reducing intra- and intermolecular disulphide bonds. The gel strip was placed on top of a separating gel consisting of 12% acrylamide and a 4% stacking gel, both containing 0.1% SDS. The electrophoresis was carried out using a constant voltage of 155V in a Mini Protean II system (Bio-Rad, Alpha Technologies, Dublin, Ireland). The gels were stained in a 0.5% Coomassie brilliant blue R-250, 25% isopropanol, 10% acetic acid solution. The turbidity of the denatured pea protein solutions were measured using a Varian Cary1 UV/visible spectrophotometer (JVA Analytical, Dublin, Ireland) at a wavelength of 590nm. As the size and/or number of the aggregates increased, more light was scattered leading to an increase in the apparent absorbance of the solutions; hence correlated with the denaturation kinetics. Dynamic light scattering (Malvern Zetamaster; model 7EM; Malvern Instruments Ltd, Worcester, UK) was also used to measure the sizes of the aggregates formed during the heating step of pea protein. The scattered light was detected at a fixed angle of 90°. The cumulative method was used to find the mean average (z-average) or the size of a particle that corresponded to the mean of the intensity distribution.

*Ex Vivo Gastro-intestinal Resistance / Stability*

In order to determine the efficiency of pea protein microbeads / microcapsules as a delivery vehicle, it is important to elucidate their resistance to gastric conditions and subsequent digestion in intestinal conditions. In order to evaluate these conditions gastrointestinal studies were conducted using stomach and intestinal contents obtained from slaughtered pigs (*ex vivo* conditions.) Stomach conditions were pH 1.6 and pepsin enzyme activity was measured (44.46 $\pm$

2.34 umol Tyrosine equivalents). Intestinal contents were obtained from the proximal ileum and enzyme activity was further investigated. Trypsin activity was measured at 21.39 umol $\pm$ 2.13 and chymotrypsin activity was measured at 319.43 $\pm$ 23.85 umol.

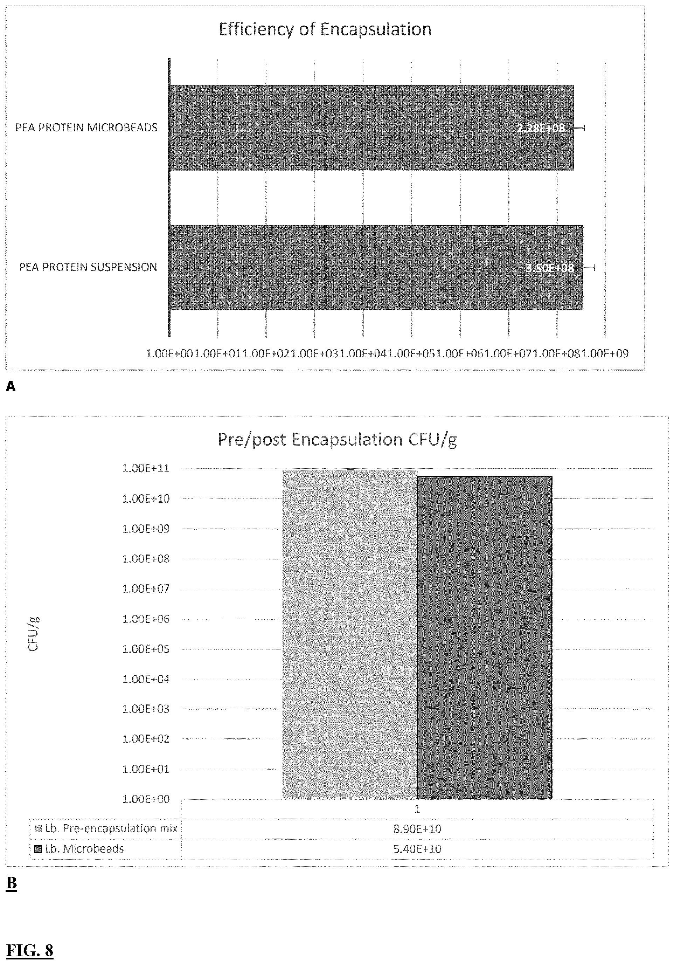

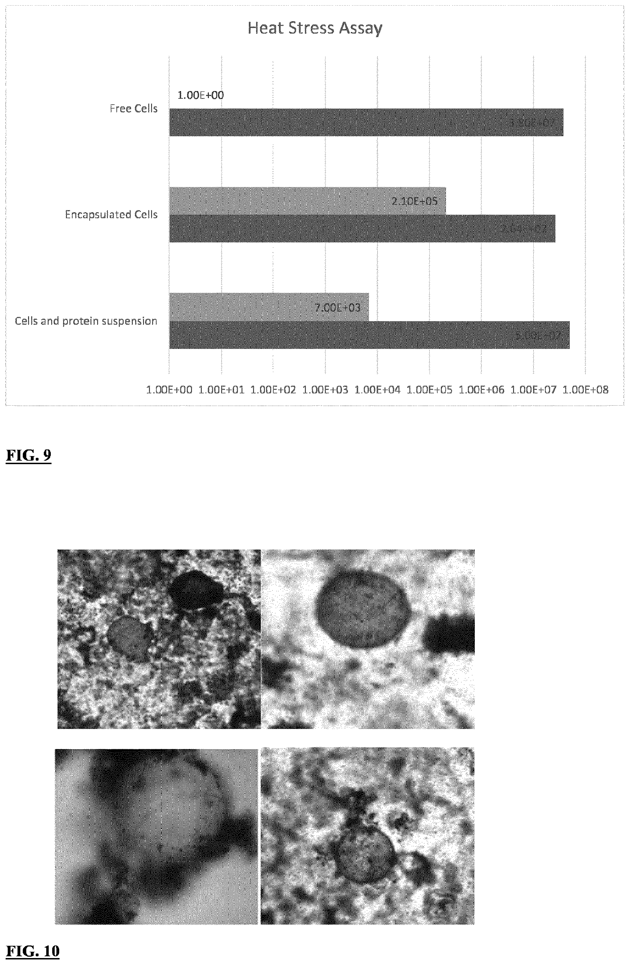

Figure 8 illustrates the acid stability of pea protein micro-beads / microcapsules during *ex vivo* porcine stomach digestion during 3 hours incubation. The microbeads / microcapsules remain robust and after 3 hours the surface begins to shrink, possibly in response to an acid gradient between the core of the bead and the external environment. Fig.8A and 8B show the visual change in the microbead appearance during 3-hour incubation; however the structure remains intact. Fig 8C illustrates the digestion of these microbeads during intestinal incubation in the presence of trypsin, chymotrypsin and other typical intestinal enzymes. The strength of the micro - beads during stomach incubation is shown in Fig.10 and illustrates that microbead strength decreases during stomach incubation; however, the overall strength of the micro-bead remains relatively high (632.32g $\pm$ 24.32g). Intestinal digestion of the pea protein microbeads is visualized in Fig. 10 where the Gel permeation chromatography screens for peptide release.

*Probiotic Encapsulation in Pea Protein Microbeads*

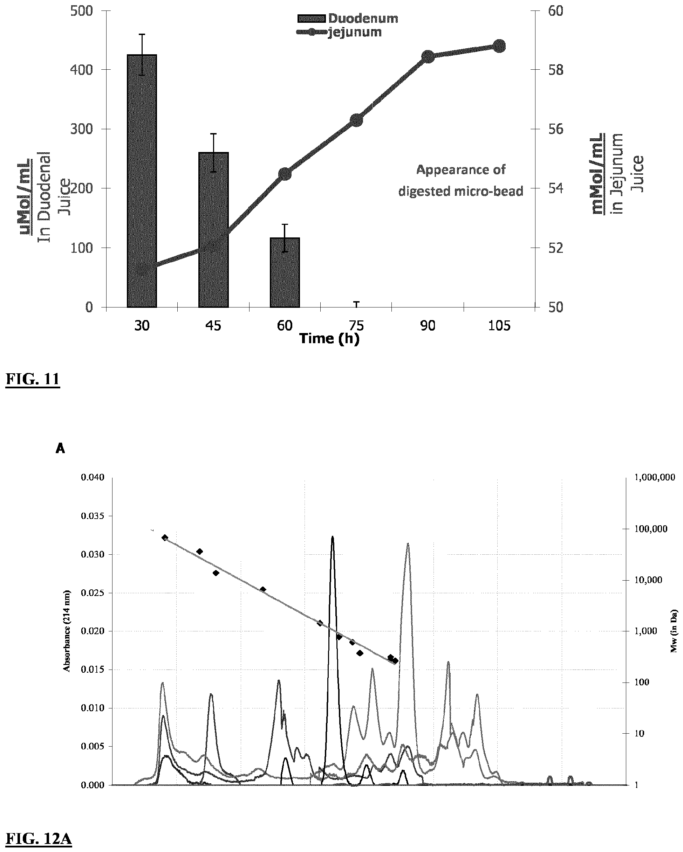

Following characterisation of the microbead for stomach resistance and intestinal digestion, a probiotic strain was encapsulated within pea protein micro-beads and cell survival was evaluated during i) the encapsulation process (Fig. 10); heat stress (Fig.11). Figure 10 illustrates the mild conditions utilised for encapsulation of probiotics in pea protein. Figure 11 illustrate the survival of probiotics in the presence of heat stress. This graph illustrates the heat protection provided by encapsulation (structure of a microbead), which is significantly higher than that provided by pea protein alone.

*Human data obtained for capsule delivery of native pea protein to the ileum*

*Design of human study:*

Four participants were intubated with a 145cm nasoduodenal catheter

The catheter was introduced into the stomach and the tip was positioned in the intestine under radiological guidance and verification

Following overnight fasting, participants were instructed to consume the encapsulated prototype within 5 minutes (40mL volume + approx. 120 mL water)

During intra-duodenal infusion of drink, the fluid was infused for 10- 200 min

After 180 -220 min the naso-duodenal catheter was removed and subjects were allowed to eat *ad liteum*

Position of the catheter is shown on the right

Table 2 below illustrates the position of the catheter in the intestine of the subject

TABLE 2

| Catheter ports | Centimeters from nose | Location |
|---|---|---|
| 5 | 80 | Duodenum |
| 7 | 105 | Proximal Jejunum |
| 6 | 120 | Jejunum |
| 3 | 130 | Jejunum |
| 4 | 155 | Jejunum |
| 2 | 170 | Ileum |
| 1 | 185* | Ileum |
| *(port 1 is at -5cm, numbering on catheter from -10 till 255) | | |

*Results:*

- 10-35 minutes: Visualisation of intact micro-capsules in duodenum
- 10-55 minutes: No significant increase in the protein or peptide content in duodenal, jejunal or ileal regions
- 35-90 minutes: Detection of micro capsules break-down in jejunal regions
- 35- 120 minutes: Apparent increase in protein content in jejunal regions
- 90+ minutes: Spontaneous appearance of native pea protein in proximal jejunum & Ileum
- 90+ minutes: Accumulated presence of peptides in proximal jejunum & Ileum
- 180+ minutes: No appearance of native pea protein in proximal jejunum & Ileum

## Claims

1. A method of producing a denatured pea protein solution comprising the steps of:

   solubilising pea protein in an alkali solvent, to provide a 6-9% pea protein solution (w/v) having a pH of at least 7;
   resting the solubilised pea protein solution for at least 15 minutes to further solubilise and hydrate the pea protein;
   heating the rested pea protein solution under conditions sufficient to heat-denature at least 90% of the pea protein while maintaining the solution in a form suitable for extrusion; and
   actively cooling the denatured pea protein solution to accelerate cooling and prevent gelation;

   wherein at least 90% by weight of the pea protein in the denatured pea protein solution is present as a soluble pea protein aggregate as determined by the Shake Flask method as described above under the heading "Method of determining solubility of pea protein solution".

2. A method as claimed in Claim 1 in which the pea protein is solubilised in an alkali solvent to provide a pea protein solution having a pH of at least 10.

3. A method as claimed in Claim 1 or 2 in which the pea protein is solubilised in an alkali solvent to provide a pea protein solution having a pH of 10 to 11.

4. A method as claimed in any preceding Claim in which the cooled denatured pea protein solution is centrifuged to remove insoluble matter.

5. A method as claimed in any preceding Claim in which the pea protein is selected from pea protein isolate (PPI) or pea protein concentrate (PPC).

6. A denatured pea protein solution produced according to the method of any of Claims 1 to 5 comprising 6-9% denatured pea protein (w/v), in which at least 90% (w/w) of the pea protein in the denatured pea protein solution is present as a soluble pea protein aggregate as determined by the Shake Flask method as described above under the heading "Method of determining solubility of pea protein solution", wherein the solution has a viscosity that is sufficiently low to allow the solution be extruded into microdroplets.

7. A denatured pea protein solution as claimed in Claim 6, in which at least 95% (w/w) of the pea protein in the denatured pea protein solution is present as a soluble pea protein aggregate as determined by the Shake Flask method as described above under the heading "Method of determining solubility of pea protein solution".

8. A method of producing microparticles having a denatured pea protein matrix, the method comprising the steps of:

   providing a denatured pea protein solution according to Claim 6 or Claim 7;
   treating the denatured pea protein solution to form microdroplets; and
   cross-linking and chelating the microdroplets to form microparticles, in which the step of cross-linking and chelating the microdroplets comprises immediately gelling the microdroplets in an acidic gelling bath having a pH that is less than the pI of the pea protein to form microparticles.

9. A method as claimed in Claim 8 in which the step of treating the denatured pea protein solution to form microdroplets comprises the step of extruding the solution through a nozzle assembly to form the microdroplets.

10. A method as claimed in Claim 9 in which an active agent is added to the denatured pea protein solution prior to the microdroplet forming step, and optionally after the heating step.

**11.** A method as claimed in Claim 9 in which the nozzle assembly comprises a single nozzle, and wherein the microparticles are microbeads having a continuous denatured pea protein matrix with active agent distributed throughout the denatured pea protein matrix.

**12.** A method as claimed in Claim 9 in which the nozzle assembly comprises an outer nozzle disposed concentrically around an inner nozzle, in which the denatured pea protein solution is extruded through the outer nozzle and an active agent solution comprising active agent is simultaneously extruded through the inner nozzle, and wherein the microparticles are microcapsules having a denatured pea protein shell and a core comprising active agent.

**13.** A method as claimed in Claim 12 in which the nozzle assembly comprises an electrostatic voltage system configured to apply an electrical potential between the nozzle and an electrode disposed beneath the nozzle.

**14.** A method as claimed in any of Claims 8 to 13 including an additional step of coating the formed microparticles, microbeads or microcapsules in chitosan or gelatin, in which the coating is performed by immersion of the microparticles, microbeads or microcapsules in a chitosan or gelatin bath.

**Patentansprüche**

**1.** Verfahren zur Herstellung einer Lösung von denaturiertem Erbsenprotein, das die folgenden Schritte umfasst:

Lösen von Erbsenprotein in einem alkalischen Lösungsmittel, um eine 6-9 %ige Erbsenproteinlösung (m/V) bereitzustellen, die einen pH von mindestens 7 aufweist;
Ruhenlassen der Lösung von gelöstem Erbsenprotein für mindestens 15 Minuten, um das Erbsenprotein weiter zu lösen und zu hydratisieren;
Erwärmen der ruhengelassenen Erbsenproteinlösung unter Bedingungen, die zur Denaturierung durch Wärme von mindestens 90 % des Erbsenproteins hinreichend sind, während die Lösung in einer Form gehalten wird, die für das Verspritzen geeignet ist; und
aktives Abkühlen der Lösung von denaturiertem Erbsenprotein, um das Abkühlen zu beschleunigen und Gelierung zu verhindern;

wobei mindestens 90 Gewichts-% des Erbsenproteins in der Lösung von denaturiertem Erbsenprotein als lösliches Erbsenproteinaggregat vorliegt, wie durch das Shake-Flask-Verfahren bestimmt wird, wie vorstehend unter "Method of determining solubility of pea protein solution" beschrieben ist.

**2.** Verfahren nach Anspruch 1, in dem das Erbsenprotein in einem alkalischen Lösungsmittel gelöst wird, um eine Erbsenproteinlösung bereitzustellen, die einen pH von mindestens 10 aufweist.

**3.** Verfahren nach Anspruch 1 oder 2, in dem das Erbsenprotein in einem alkalischen Lösungsmittel gelöst wird, um eine Erbsenproteinlösung bereitzustellen, die einen pH von 10 bis 11 aufweist.

**4.** Verfahren nach einem vorstehenden Anspruch, in dem die abgekühlte Lösung von denaturiertem Erbsenprotein zentrifugiert wird, um unlösliches Material zu entfernen.

**5.** Verfahren nach einem vorstehenden Anspruch, in dem das Erbsenprotein aus Erbsenproteinisolat (PPI) oder Erbsenproteinkonzentrat (PPC) ausgewählt wird.

**6.** Lösung von denaturiertem Erbsenprotein, die gemäß dem Verfahren nach einem der Ansprüche 1 bis 5 hergestellt wird, die 6-9 % denaturiertes Erbsenprotein (m/V) umfasst, in der mindestens 90 % (m/m) des Erbsenproteins in der Lösung von denaturiertem Erbsenprotein als lösliches Erbsenproteinaggregat vorliegt, wie durch das Shake-Flask-Verfahren bestimmt wird, wie vorstehend unter "Method of determining solubility of pea protein solution" beschrieben ist, wobei die Lösung eine Viskosität aufweist, die hinreichend niedrig ist, um zu ermöglichen, dass die Lösung zu Mikrotröpfchen verspritzt wird.

**7.** Lösung von denaturiertem Erbsenprotein nach Anspruch 6, in der mindestens 95 % (m/m) des Erbsenproteins in der Lösung von denaturiertem Erbsenprotein als lösliches Erbsenproteinaggregat vorliegt, wie durch das Shake-Flask-Verfahren bestimmt wird, wie vorstehend unter "Method of determining solubility of pea protein solution" beschrieben ist.

**8.** Verfahren zur Herstellung von Mikropartikeln, die eine denaturierte Erbsenproteinmatrix aufweisen, wobei das Verfahren die folgenden Schritte umfasst:

Bereitstellen einer Lösung von denaturiertem Erbsenprotein nach Anspruch 6 oder Anspruch 7;
Behandeln der Lösung von denaturiertem Erbsenprotein, um Mikrotröpfchen zu bilden; und
Vernetzen und Chelatisieren der Mikrotröpfchen, um Mikropartikel zu bilden, in dem der Schritt des Vernetzens und Chelatisierens der Mikrotröpfchen die unmittelbare Gelierung der Mikrotröpfchen in einem sauren Gelierungsbad umfasst, das einen pH aufweist, der kleiner ist als der pI des Erbsenproteins, um Mikropartikel zu bilden.

**9.** Verfahren nach Anspruch 8, in dem der Schritt des Behandelns der Lösung von denaturiertem Erbsenprotein, um Mikrotröpfchen zu bilden, den Schritt des Verspritzens der Lösung durch eine Düsenanordnung umfasst, um die Mikrotröpfchen zu bilden.

**10.** Verfahren nach Anspruch 9, in dem ein Wirkstoff zu der Lösung von denaturiertem Erbsenprotein vor dem Schritt des Bildens von Mikrotröpfchen und optional nach dem Erwärmungsschritt zugegeben wird.

**11.** Verfahren nach Anspruch 9, in dem die Düsenanordnung eine Einzeldüse umfasst und wobei die Mikropartikel Mikrokügelchen sind, die eine ununterbrochene denaturierte Erbsenproteinmatrix aufweisen, wobei ein Wirkstoff durchgehend in der denaturierten Erbsenproteinmatrix verteilt ist.

**12.** Verfahren nach Anspruch 9, in dem die Düsenanordnung eine äußere Düse umfasst, die konzentrisch um eine innere Düse angeordnet ist, in dem die Lösung von denaturiertem Erbsenprotein durch die äußere Düse verspritzt wird und eine Wirkstofflösung, die den Wirkstoff umfasst, gleichzeitig durch die innere Düse verspritzt wird, und wobei die Mikropartikel Mikrokapseln sind, die eine Hülle von denaturiertem Erbsenprotein und einen Kern, der den Wirkstoff umfasst, aufweisen.

**13.** Verfahren nach Anspruch 12, in dem die Düsenanordnung ein elektrostatisches Spannungssystem umfasst, das zum Anlegen eines elektrischen Potenzials zwischen der Düse und einer Elektrode, die unter der Düse angeordnet ist, konfiguriert ist.

**14.** Verfahren nach einem der Ansprüche 8 bis 13, das einen zusätzlichen Schritt des Beschichtens der gebildeten Mikropartikel, Mikrokügelchen oder Mikrokapseln in Chitosan oder Gelatine einschließt, in dem das Beschichten durch Eintauchen der Mikropartikel, Mikrokügelchen oder Mikrokapseln in einem Chitosan- oder Gelatinebad durchgeführt wird.

**Revendications**

**1.** Méthode destinée à la production d'une solution de protéines de pois dénaturées, comprenant les étapes consistant à :

solubiliser des protéines de pois dans un solvant alcalin, afin de fournir une solution de protéines de pois à 6-9% (p/v) ayant un pH d'au moins 7 ;
laisser reposer la solution de protéines de pois solubilisées pendant au moins 15 minutes, afin de solubiliser et d'hydrater davantage les protéines de pois ;
faire chauffer la solution de protéines de pois reposée dans des conditions suffisantes pour dénaturer thermiquement au moins 90% des protéines de pois tout en maintenant la solution sous une forme convenable pour une extrusion ; et
refroidir de manière active la solution de protéines de pois dénaturées afin d'accélérer le refroidissement et empêcher une gélification ;

dans laquelle au moins 90% en poids des protéines de pois dans la solution de protéines de pois dénaturées sont présentes sous forme d'agrégats de protéines de pois solubles tel que déterminé par la méthode par Agitation de Flacons telle que décrite ci-dessus sous l'intitulé « Method of determining solubility of pea protein solution » [« Méthode de détermination de la solubilité d'une solution de protéines de pois »].

**2.** Méthode selon la revendication 1, dans laquelle les protéines de pois sont solubilisées dans un solvant alcalin, afin de fournir une solution de protéines de pois ayant un pH d'au moins 10.

3. Méthode selon la revendication 1 ou 2, dans laquelle les protéines de pois sont solubilisées dans un solvant alcalin, afin de fournir une solution de protéines de pois ayant un pH allant de 10 à 11.

4. Méthode selon l'une quelconque des revendications précédentes, dans laquelle la solution refroidie de protéines de pois dénaturées est centrifugée, afin d'éliminer les matières insolubles.

5. Méthode selon l'une quelconque des revendications précédentes, dans laquelle les protéines de pois sont choisies parmi un isolat de protéines de pois (PPI) ou un concentré de protéines de pois (PPC).

6. Solution de protéines de pois dénaturées produite selon la méthode selon l'une quelconque des revendications 1 à 5, comprenant 6-9% de protéines de pois dénaturées (p/v), où au moins 90% (p/p) des protéines de pois dans la solution de protéines de pois dénaturées sont présentes sous forme d'agrégats de protéines de pois solubles tel que déterminé par la méthode par Agitation de Flacons telle que décrite ci-dessus sous l'intitulé « Method of determining solubility of pea protein solution » [« Méthode de détermination de la solubilité d'une solution de protéines de pois »], où la solution possède une viscosité qui est suffisamment faible pour permettre l'extrusion de la solution en microgouttelettes.

7. Solution de protéines de pois dénaturées selon la revendication 6, où au moins 95% (p/p) des protéines de pois dans la solution de protéines de pois dénaturées sont présentes sous forme d'agrégats de protéines de pois solubles tel que déterminé par la méthode par Agitation de Flacons telle que décrite ci-dessus sous l'intitulé « Method of determining solubility of pea protein solution » [« Méthode de détermination de la solubilité d'une solution de protéines de pois »].

8. Méthode de production de microparticules ayant une matrice de protéines de pois dénaturées, la méthode comprenant les étapes consistant à :

fournir une solution de protéines de pois dénaturées selon la revendication 6 ou la revendication 7 ;
traiter la solution de protéines de pois dénaturées afin de former des microgouttelettes ; et
réticuler et chélater les microgouttelettes afin de former des microparticules, où l'étape de réticulation et de chélation des microgouttelettes comprend la gélification immédiate des microgouttelettes dans un bain de gélification acide ayant un pH qui est inférieur au pI des protéines de pois, afin de former des microparticules.

9. Méthode selon la revendication 8, dans laquelle l'étape consistant à traiter la solution de protéines de pois dénaturées afin de former des microgouttelettes comprend l'étape consistant à extruder la solution dans un ensemble de buses afin de former les microgouttelettes.

10. Méthode selon la revendication 9, dans laquelle on ajoute un agent actif à la solution de protéines de pois dénaturées préalablement à l'étape de formation des microgouttelettes, et éventuellement après l'étape de chauffage.

11. Méthode selon la revendication 9, dans laquelle l'ensemble de buses comprend une buse unique, et où les microparticules sont des microbilles ayant une matrice continue de protéines de pois dénaturées, un agent actif étant distribué dans l'ensemble de la matrice de protéines de pois dénaturées.

12. Méthode selon la revendication 9, dans laquelle l'ensemble de buses comprend une buse externe disposée de manière concentrique autour d'une buse interne, où la solution de protéines de pois dénaturées est extrudée dans la buse externe et une solution d'agent actif comprenant un agent actif est extrudée de manière simultanée dans la buse interne, et où les microparticules sont des microcapsules ayant une enveloppe de protéines de pois dénaturées et un coeur comprenant un agent actif.

13. Méthode selon la revendication 12, dans laquelle l'ensemble de buses comprend un système de tension électrostatique configuré afin d'appliquer un potentiel électrique entre la buse et une électrode disposée sous la buse.

14. Méthode selon l'une quelconque des revendications 8 à 13, comportant une étape supplémentaire consistant à revêtir les microparticules, microbilles ou microcapsules formées, par un chitosane ou de la gélatine, où le revêtement est effectué par l'immersion des microparticules, microbilles ou microcapsules, dans un bain de chitosane ou de gélatine.

Pea Protein Microbeads      Pea Protein Microcapsules      Milk Protein Micro-beads

**FIG. 1**

**A**

**FIG. 2**

**FIG. 3A**

**FIG. 3B**

**FIG. 3C**

A

B

**FIG. 4**

**FIG. 5**

**FIG. 6**

**FIG. 7**

A

B

**FIG. 8**

**FIG. 9**

**FIG. 10**

**FIG. 11**

A

**FIG. 12A**

**FIG. 13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2014314944 A

### Non-patent literature cited in the description

- **KLEMMER et al.** *International Journal of Food Science and Technology,* 2011, vol. 46, 2248-2256
- **CHAVAN et al.** *Food Chemistry,* 01 August 2001, vol. 74 (2), 177-187
- **DIAELDIN M. RAGAB et al.** *Food Chemistry,* 01 February 2004, vol. 84 (2), 207-212
- **MARINA CARBONARO et al.** *Journal of Agricultural and Food Chemistry,* 01 September 1997, vol. 45 (9), 3387-3394
- **HAO FENG.** *The Free Online Library,* 01 November 2015, 1-2
- **RAUL IANCHICI et al.** *Journal on Processing and Energy in Agriculture,* 01 January 2011, 87-89
- **KATO ; NAKAI.** Hydrophobicity determined by a fluorescence probe method and its correlation with surface properties of proteins. *Biochim Biophys Acta,* 24 July 1980, vol. 624 (1), 13-20
- **ADLER-NISSEN.** Determination of the degree of hydrolysis of food protein hydrolysates by trinitrobenzenesulfonic acid. *J. Adler-Nissen J. Agric. Food Chem.,* 1979, vol. 27 (6), 1256-1262
- **LAEMMLI U.K.** Cleavage of structural proteins during the assembly of the head of bacteriophage T4. *Nature,* 1970, vol. 227 (5259), 680-5